# EUROPÄISCHE PATENTSCHRIFT

(11) **EP 0 932 761 B1**
(45) Veröffentlichungstag und Bekanntmachung des Hinweises auf die Patenterteilung: **06.10.2004**
(21) Anmeldenummer: 98933543.5
(22) Anmeldetag: 15.05.1998
(51) Int. Cl.: F04B 1/04, F04B 9/04

(54) **KOLBENPUMPE**
PISTON PUMP
POMPE A PISTON

(30) Priorität: 30.07.1997 DE 19732811; 29.01.1998 DE 19803333
(43) Veröffentlichungstag der Anmeldung: 04.08.1999
(73) Patentinhaber: ROBERT BOSCH GMBH, 70442 Stuttgart (DE)
(72) Erfinder: SCHULLER, Wolfgang, D-74343 Sachsenheim (DE); ECKSTEIN, Ursula, D-71701 Schwieberdingen (DE)
(86) Internationale Anmeldenummer: PCT/DE1998/001355
(87) Internationale Veröffentlichungsnummer: WO 1999/006696

(56) Entgegenhaltungen:
- DE-A- 4 107 979
- DE-A- 19 605 369
- FR-A- 2 736 690
- GB-A- 1 366 988
- US-A- 3 578 879
- US-A- 5 628 625

## Beschreibung

Die Erfindung betrifft eine Kolbenpumpe für eine Fahrzeugbremsanlage nach der Gattung des Hauptanspruchs.

Eine derartige Kolbenpumpe ist beispielsweise aus der FR 2 736 690 A bereits bekannt. Diese Kolbenpumpe umfasst einen aus Kunststoff bestehenden Kolben, welcher axial verschieblich in einem Pumpengehäuse geführt ist. Dieser Kolben weist ist an einer Anlauffläche ein Anlaufstück aus verschleißfestern Material auf. Ferner hat die Kolbenpumpe ein rotierend antreibbares Antriebselement, das auf einer Stirnseite des Kolbens angeordnet ist und an dem der Kolben mit seinem Anlaufstück anliegt. Zur Verankerung am Kolben dient ein Schaft des Anlaufstücks, der in einer Bohrung des Kolbens durch Einpressen kraftschlüssig festgelegt ist. Das aus der Bohrung vorstehende Ende des Anlaufstücks überdeckt die gesamte Stirnfläche des Kolbens.

Eine Kolbenpumpe für eine hydraulische, schlupfgeregelte Fahrzeugbremsanlage ist zudem bekannt aus der DE 41 07 979 A1. Diese bekannte Kolbenpumpe weist ein Pumpengehäuse mit einer Zylinderbohrung auf, in der ein Kolben ebenfalls axial verschieblich aufgenommen ist. Zum Antrieb des Kolbens zu einer in axialer Richtung hin- und hergehenden Hubbewegung ist ein rotierend antreibbares Exzenterelement vorgesehen, das auf einer Stirnseite des Kolbens angeordnet ist und an dessen Umfang der Kolben mit einer eine Anlauffläche bildenden Stirnfläche anliegt. Der Kolben dieser bekannten Kolbenpumpe ist ein aufwändiges, mehrfach gestuftes, spanend durch Drehen und Bohren hergestelltes Werkstück. Eine Umfangsfläche des Kolbens muss, da sie eine Lauffläche des Kolbens bildet, geschliffen werden.

### Vorteile der Erfindung

Die erfindungsgemäße Kolbenpumpe mit den Merkmalen des Anspruchs 1 weist einen Kolben aus Kunststoff auf, der beispielsweise durch Spritzgießen hergestellt ist. Damit die am Antriebselement anliegende, die Anlauffläche bildende Stirnfläche des Kolbens den vor allem aufgrund der Reibung zwischen dem Antriebselement und der Anlauffläche auftretenden Beanspruchungen dauerhaft Stand hält, weist der Kolben ein Anlaufstück aus verschleißfestern ...

Material an seiner Anlauffläche auf. Das Anlaufstück ist beispielsweise scheibenförmig, es wird vorzugsweise vor dem Spritzgießen des Kolbens ein Spritzgießwerkzeug eingelegt und mit dem Kunststoff des Kolbens umspritzt, wobei die zur Anlage am Exzenterelement vorgesehene Anlauffläche nicht mit Kunststoff überzogen ist. Das Anlaufstück kann beispielsweise aus einem Metall wie gehärtetem Stahl oder aus Keramik, beispielsweise Sinterkerarmik bestehen.

Die erfindungsgemäße Kolbenpumpe hat zunächst den Vorteil, daß ihr Kolben einfach, schnell und kostengünstig in einem Arbeitsgang durch Spritzgießen herstellbar ist. Eine Nachbearbeitung beispielsweise durch Schleifen des Kolbenumfangs oder Prägen eines im Kolben angeordneten Ventilsitzes entfällt. Eventuell zum Fluideinlaß in die Kolbenpumpe oder zum Fluidauslaß aus der Kolbenpumpe im Kolben erforderliche Fluidkanäle werden mit in das Spritzgießwerkzeug eingelegten Formkemen hergestellt, so daß auch hierfür keine Nachbearbeitung notwendig ist.

Weitere Vorteile der Erfindung sind gute Gleiteigenschaften des Kolbens im Pumpengehäuse durch die Herstellung des Kolbens aus Kunststoff. Zur Verbesserung der Gleiteigenschaften und zur Verminderung von Verschleiß können dem Kunststoff des Kolbens Teflonanteile beigemengt sein. Sofern ein den Fluideinlaß oder den Fluidauslaß steuerndes Ventil am Kolben angebracht ist, dessen Ventilsitz am Kolben ausgebildet ist, verbessert das Elastizitätsverhalten des aus Kunststoff bestehenden Kolbens Schließverhalten und Dichtheit des Ventils insbesondere bei steigendem Druck.

Der Kolben kann auch zur Abdichtung zwischen dem Kolben und dem Pumpengehäuse dienen. Dies hat den Vorteil, daß auf einen Dichtring verzichtet werden kann.

Weiterer Vorteil der Erfindung ist, daß ohne zusätzlichen Aufwand ein Stufenkolben hergestellt werden kann, bei dem ein Ende des Kolbens einen größeren Durchmesser hat als das andere Ende des Kolbens.

Die Unteransprüche haben vorteilhafte Ausgestaltungen und Weiterbildungen der im Hauptanspruch angegebenen Erfindung zum Gegenstand.

Bei einer Ausgestaltung der Erfindung gemäß Anspruch 3 weist das Anlaufstück Forrnschlußelemente an seiner Außenseite auf, die einen Formschluß mit dem Kolben bewirken, um den Halt des Anlaufstücks im Kolben zu verbessern. Derartige Formschlußelemente können umlaufende oder unterbrochene Rippen oder Nuten oder dgl. sein.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

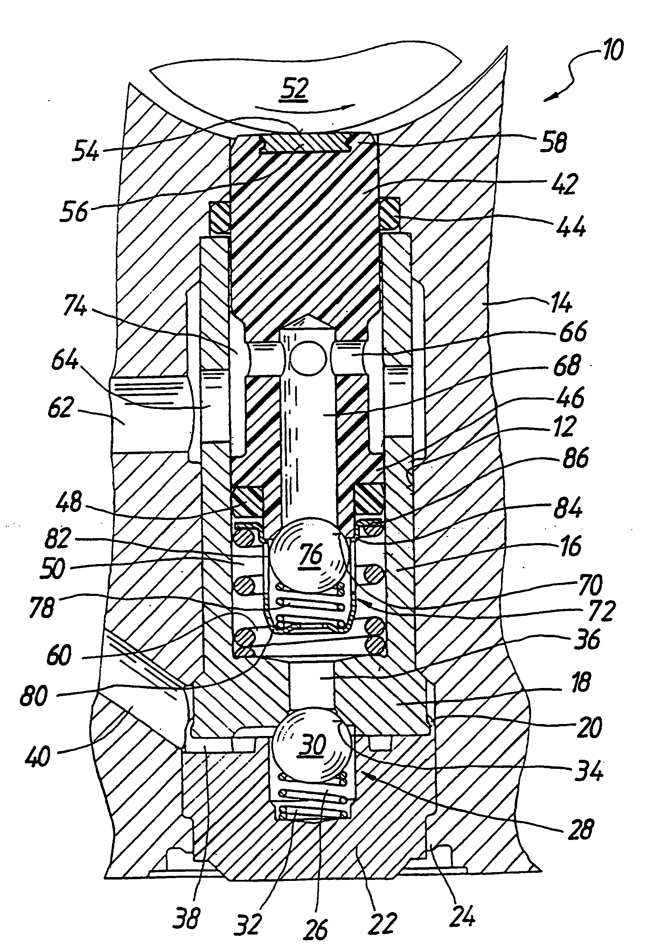

Die Erfindung wird nachfolgend anhand eines bevorzugt ausgewählten, in der Zeichnung dargestellten Ausführungsbeispiels näher erläutert. Die einzige Figur zeigt einen Achsschnitt einer erfindungsgemäßen Kolbenpumpe.

### Beschreibung des Ausführungsbeispiels

Die in der Zeichnung dargestellte, erfindungsgemäße Kolbenpumpe 10 ist in eine Zylinderbohrung 12 in einem Pumpengehäuse 14 eingesetzt, welches von einem Hydraulikblock einer im übrigen nicht dargestellten Fahrzeugbremsanlage gebildet ist. In den Hydraulikblock, von dem in der Zeichnung der besseren Übersichtlichkeit wegen lediglich ein die Kolbenpumpe 10 umgebendes Bruchstück dargestellt ist, sind weitere, nicht dargestellte hydraulische Bauteile wie Magnetventile und dgl. eingesetzt und hydraulisch miteinander und mit der Kolbenpumpe 10 verschaltet. Der Hydraulikblock mit den in ihn eingesetzten hydraulischen Bauelementen einschließlich der Kolbenpumpe 10 ist Teil einer Schlupfregeleinrichtung einer Kraftfahrzeugbremsanlage. Der Hydraulikblock ist in an sich bekannter Weise an einen nicht dargestellten Hauptbremszylinder angeschlossen, an den Hydraulikblock 10 sind nicht dargestellte Radbremszylinder hydraulisch angeschlossen.

Die Kolbenpumpe 10 weist eine Laufbuchse 16 mit einem mit ihr einstückigen Laufbuchsenboden 18 auf, die in die Pumpenbohrung 12 eingepreßt ist. Mittels eines Bördels 20 ist ein zylindrischer Verschlußstopfen 22 am Laufbuchsenboden 18 angebracht, der durch eine Verstemmung 24 des Pumpengehäuses 14 ein Ende der Pumpenbohrung 12 druckdicht verschließt und die Laufbuchse 16 im Pumpengehäuse 14 fixiert. In eine Sackbohrung 26 des Verschlußstopfens 22 ist ein Rückschlagventil als Auslaßventil 28 eingesetzt, das als Ventilschließkörper eine Ventilkugel 30 aufweist, die von einer Schraubendruckfeder als Ventilschließfeder 32 gegen einen konischen Ventilsitz 34 gedrückt wird, welcher an einer Mündung eines axialen Durchgangslochs 34 im Laufbuchsenboden 18 ausgebildet ist. Ein Auslaß erfolgt durch einen von einer radialen Nut im Verschlußstopfen 22 gebildeten Auslaßkanal 38, die mit einer Auslaßbohrung 40 im Pumpengehäuse 14 kommuniziert.

Ein Kolben 42 der erfindungsgemäßen Kolbenpumpe 10 ist ein im wesentlichen zylindrisches Spritzgießteil aus Kunststoff, das ein kurzes Stück aus der Laufbuchse 16 vorsteht. Der Kolben 42 besteht aus einem kohlefaserverstärkten Kunststoff, dem Teflonanteile zur Verbesserung seiner Gleiteigenschaften beigemischt sind. An seinem aus der Laufbuchse 16 vorstehenden Ende ist der Kolben 42 unmittelbar in der Pumpenbohrung 12 des Pumpengehäuses 14 axial geführt. Eine Abdichtung zwischen Pumpengehäuse 14 und Kolben 42 erfolgt mittels eines O-Rings 44, der in einen ringstufenförmigen Absatz der Pumpenbohrung 12 eingesetzt ist und von einem Stirnende der Laufbuchse 16 dort gehalten wird. Zur Führung seines in der Laufbuchse 16 befindlichen Endes weist der Kolben 42 einen mit ihm einstückigen Bund 46 auf, mit dem der Kolben 42 in der Laufbuchse 16 axial geführt ist. Ein Gleitring oder dgl. ist nicht erforderlich. Eine Abdichtung zwischen der Laufbuchse 16 und dem Kolben 42 an dem in der Laufbuchse 16 befindlichen Ende des Kolbens 42 erfolgt mittels eines gummielastischen Etastomerdichtrings 48, der von einer einem Verdrängungsraum 50 der Kolbenpumpe 10 zugewandten Seite des Bundes 46 auf den Kolben 42 aufgesetzt ist. Der Verdrängungsraum 50 ist von der Laufbuchse 16 umschlossen, er wird an seinen Stirnenden vom Laufbuchsenboden 18 einerseits und vom Kolben 42 mit dem Elastomerdichtring 48 andererseits begrenzt. Ein Volumen des Verdrängungsraums 50 vergrößert und verkleinert sich bei einer axial in der Laufbuchse 16 hin- und hergehenden Hubbewegung des Kolbens 42, wodurch in an sich bekannter Weise Fluid von der Kolbenpumpe 10 angesaugt und ausgestoßen/gefördert wird.

Auf der aus der Laufbuchse 16 vorstehenden Stirnseite des Kolbens 42 ist ein elektromotorisch rotierend antreibbarer Exzenter 52 angeordnet, an dessen Umfangsfläche der Kolben 42 mit einer Stirnfläche 54 anliegt. Die am Umfang des Exzenters 52 anliegende Stimfläche bildet eine Anlauffläche 54 des Kolbens 42. Da beim Betrieb der Kolbenpumpe 10 durch den rotierenden Antrieb des Exzenters 52 eine Reibung zwischen dem Umfang des Exzenters 52 und der Anlauffläche 54 des Kolbens 42 stattfindet, weist der Kolben 42 ein Exzenteranlaufstück 56 aus verschleißfestem Material auf, das die Anlauffläche 54 bildet. Das Exzenteranlaufstück 56 hat die Form einer Scheibe, es ist im dargestellten Ausführungsbeispiel aus gehärtetem Stahl hergestellt. Das Exzenteranlaufstück 56 wird bei der Kolbenherstellung in ein nicht dargestelltes Spritzgießwerkzeug eingelegt und mit dem den Kolben 42 bildenden Kunststoff umspritzt, wobei die Anlauffläche 54 von Kunststoff frei bleibt und das Exzenteranlaufstück 56 im übrigen vollständig in den Kunststoff des Kolbens 42 eingebettet ist. An seinem Umfang weist das Exzenteranlaufstück 56 eine umlaufende, im Querschnitt halbkreisförmige Nut 58 auf, die einen Formschluß zwischen dem Kunststoff des Kolbens 42 und dem Exzenteranlaufstück 56 bewirkt und dadurch einen Halt des Exzenteranlaufstücks 56 im Kolben 42 verbessert.

Eine in den Verdrängungsraum 50 eingesetzte, am Kolben 42 angreifende Kolbenrückstellfeder 60 in Form einer Schraubendruckfeder, die sich am Laufbuchsenboden 18 abstützt, drückt den Kolben 42 gegen den Exzenter 52, d. h. die Kolbenrückstellfeder 60 hält den Kolben 42 mit seiner Anlauffläche 54 in Anlage am Umfang des Exzenters 52.

Zum Fluideinlaß weist die erfindungsgemäße Kolbenpumpe 10 eine radial zur Pumpenbohrung 12 im Pumpengehäuse 14 angebrachte Einlaßbohrung 62 auf, die in die Pumpenbohrung 12 mündet. Durch Einlaßbohrungen 64 im Umfang der Laufbuchse 16 kommuniziert die Einlaßbohrung 62 im Pumpengehäuse 14 mit einem Innenraum der Laufbuchse 16. Der Kolben 42 ist mit einander kreuzenden Querlöchem 66 ungefähr in seiner Längsmitte versehen, die ein axiales Sackloch 68 nahe dessen Grundes kreuzen. Das Sackloch 68 mündet unter Bildung eines konischen Ventilsitzes 70 eines Einlaßventils 72 der Kolbenpumpe 10 auf der dem Verdrängungsraum 50 zugewandten Stirnseite des Kolbens 42. Eine flache und breite, umlaufende Nut 74 im Kolben 42, in deren Grund die Querlöcher 66 angebracht sind, stellt sicher, daß die Querlöcher 66 in jeder Hubstellung des Kolbens 42 mit den Einlaßbohrungen 62, 64 kommunizieren. Der Kolben 42 weist mit dem Bund 46 und der Nut 74 mehrere Stufungen auf, die durch Spritzgießen des Kolbens 42 problemlos herstellbar sind. Die einen Teil des Fluideinlasses der Kolbenpumpe 10 bildenden Querlöcher 66 und das Sackloch 68 im Kolben 42 werden mit in das Spritzgießwerkzeug eingelegten Formkemen bei der Kolbenherstellung gefertigt, so daß zur Herstellung der Querlöcher 66 und des Sacklochs 68 im Kolben 42 kein separater Arbeitsgang notwendig ist.

Das Einlaßventil 72 ist an der dem Verdrängungsraum 50 zugewandten Stirnseite des Kolbens 42 angebracht. Das Einlaßventil 72 ist als federbelastetes Rückschlagventil ausgebildet. Es weist eine Ventilkugel 76 als Ventilschließkörper auf, die von einer eine Ventilschließfeder 78 bildenden Schraubendruckfeder gegen den Ventilsitz 70 an der Mündung des Sacklochs 68 des Kolbens 42 gedrückt wird. Die Ventilkugel 76 und die Ventilschließfeder 78 sind in einem napfförmigen Ventilkäfig 80 aufgenommen, der als Tiefziehteil aus Blech hergestellt ist. Die Ventilschließfeder 78 stützt sich an einem Boden des Ventilkäfigs 80 ab. Der Ventilkäfig 80 ist mit Fluiddurchlässen 82 in Umfang und Boden versehen. An einer offenen Seite ist eine Ringstufe 84 an den Ventilkäfig 80 angeformt, mit der der Ventilkäfig 80 auf das dem Verdrängungsraum 50 zugewandte Stirnende des Kolbens 42 aufgesetzt ist. Ein freier Rand des Ventilkäfigs 80 ist zu einem lochscheibenförmigen Federteller 86 radial nach außen stehend umgeformt. Die Kolbenrückstellfeder 60 greift über den Federteller 86 am Kolben 42 an. Zugleich hält der Federteller 86 den zwischen ihm und dem Bund 46 des Kolbens 42 einliegenden Elastomerdichtring 48 axial auf dem Kolben 42. Ein axialer Abstand zwischen Bund 46 und Federteller 86 ist größer als eine Breite des Elastomerdichtrings 48, so daß der Elastomerdichtring 48 axial nicht gestaucht wird. Die Kolbenrückstellfeder 60 ist erheblich stärker ausgebildet als die Ventilschließfeder 78 des Einlaßventils 72, so daß die Kolbenrückstellfeder 60 den Kolben 42 bei allen im Betrieb der Kolbenpumpe 10 auftretenden Belastungen den Kolben mit der Anlauffläche 54 in Anlage am Umfang des Exzenters 52 und den Ventilkäfig 18 gegen die Kraft der Ventilschließfeder 78 am Kolben 42 hält.

Da der Elastomerdichtring 48 auf den Kolben 42 aufgesetzt wird, bevor der Ventilkäfig 80 am Kolben 42 angebracht wird, ist der Zusammenbau dieser Teile sehr einfach, insbesondere muß der Elastomerdichtring 48 während des Zusammenbaus nicht bzw. nur sehr unwesentlich gedehnt werden.

Weil der Kolben 42 aus einem weichen Material, nämlich aus Kunststoff, besteht, kann ein Kolbenspalt zwischen der Laufbuchse 16 und dem Kolben 42 bzw. dessen Bund 46 sehr eng ausgeführt werden. Der Kolben 42 kann sogar mit etwas Vorspannung in die Laufbuchse 16 eingesetzt sein. Der Kolbenspalt der hier vorgeschlagenen Kolbenpumpe 10 kann wesentlich enger ausgeführt werden als beispielsweise bei einem Kolben aus Metall. Wegen des engen Kolbenspalts zwischen dem Kolben 42 und der Laufbuchse 16 besteht keine Gefahr, daß in Folge hohen Drucks im Verdrängungsraum 50 der Elastomerdichtring 48 in den Kolbenspalt zwischen dem Kolben 42 und der Laufbuchse 16 hineingequetscht wird.

Es ist gegebenenfalls auch möglich, auf die Laufbuchse 16 zu verzichten und den Kolben 42 ohne Laufbuchse direkt im Pumpengehäuse 14 axial verschieblich zu führen (nicht dargestellt). Dadurch kann die Anzahl der benötigten Bauteile reduziert werden. Begünstigt wird dies durch die Herstellung des Kolbens 42 aus Kunststoff, weil dieser auch bei Verzicht auf die Laufbuchse 16 für eine gute, reibungsarme und dauerhaltbare Führung des Kolbens 42 direkt im Pumpengehäuse 14 sorgt.

Der Kolben 42 ist im dargestellten Ausführungsbeispiel an seinen beiden Enden auf demselben Durchmesser geführt. Es ist auch möglich, den Kolben auf unterschiedlichen Durchmessern zu führen, also den Kolben gestuft auszubilden, um beispielsweise ein Ansaugverhalten der Kolbenpumpe 10 zu verbessern (nicht dargestellt). Weil es ohne weiteres möglich ist, dem Kolben 42 eine gewünschte, beispielsweise gestufte Form mit unterschiedlichen Kolbendurchmessern über die Länge des Kolbens zu geben, bedeutet es keinen Mehraufwand, den Kolben als gestuften Kolben auszubilden.

## Patentansprüche

1. Kolbenpumpe (10) für eine Fahrzeugbremsanlage,
mit einem Pumpengehäuse (14), in dem ein aus Kunststoff bestehender Kolben (42) axial verschieblich geführt ist, der an einer eine Anlauffläche (54) bildenden Stirnfläche ein Anlaufstück (56) aus verschleißfestem Material aufweist und mit einem rotierend antreibbaren Antriebselement (52), das auf einer Stirnseite des Kolbens (42) angeordnet ist und an dem der Kolben (42) mit seinem Anlaufstück (56) anliegt, **dadurch gekennzeichnet, dass** das Anlaufstück (56) mit Ausnahme seiner dem
Antriebselement (52) zugewandten Außenseite vom Material des Kolbens (42) umschlossen ist und umfangseitig Formschtusselemente (58) aufweist, die einen Formschluss mit dem Kolben (42) bewirken.

2. Kolbenpumpe nach Anspruch 1, **dadurch gekennzeichnet, dass** das Anlaufstück (56) scheibenförmig ist.

3. Kolbenpumpe nach Anspruch 1 oder 2, **dadurch gekennzeichnet, dass** das Anlaufstück (56) aus Metall oder aus Keramik besteht.

4. Kolbenpumpe nach einem der Ansprüche 1 bis 3, **dadurch gekennzeichnet, dass** der Kolben (42) ein Spritzgießteil ist und das Anlaufstück (56) mit Ausnahme der Anlauffläche (54) mit dem Kunststoff des Kolbens (42) umspritzt ist.

5. Kolbenpumpe nach einem der vorhergehenden Ansprüche, **dadurch gekennzeichnet, dass** der Kunststoff des Kolbens (42) Teflonanteile aufweist.

## Claims

1. Piston pump (10) for a vehicle brake system, with a pump casing (14), in which is guided axially displaceably a piston (42) which consists of plastic and which has on one end face forming a run-on face (54) a run-on piece (56) consisting of wear-resistant material, and with a rotationally drivable drive element (52) which is arranged on one end face of the piston (42) and against which the piston (42) bears with its run-on piece (56), **characterized in that** the run-on piece (56) is surrounded, with the exception of its outside facing the drive element (52), by the material of the piston (42) and has circumferentially form-fitting elements (58) which bring about a form fit with the piston (42).

2. Piston pump according to Claim 1, **characterized in that** the run-on piece (56) is disc-shaped.

3. Piston pump according to Claim 1 or 2, **characterized in that** the run-on piece (56) consists of metal or of ceramic.

4. Piston pump according to one of Claims 1 to 3, **characterized in that** the piston (42) is an injection moulding, and the plastic of the piston (42) is injection-moulded around the run-on piece (56), with the exception of the run-on face (54).

5. Piston pump according to one of the preceding claims, **characterized in that** the plastic of the piston (42) has Teflon fractions.

## Revendications

1. Pompe à piston (10) pour un système de freinage de véhicule, comportant un carter de pompe (14), dans lequel est logé de façon mobile axialement un piston (42) constitué de matière plastique, qui présente au niveau d'une face frontale formant une surface de butée (54) un élément de butée (56) constitué d'un matériau résistant à l'usure, et un élément d'entraînement (52) pouvant être entraîné de façon rotative, qui est disposé sur une face frontale du piston (42) et sur lequel repose le piston (42) avec son élément de butée (56),
**caractérisée en ce que**
l'élément de butée (56) est entouré, à l'exception de son côté extérieur tourné vers l'élément d'entraînement (52), par la matière du piston (42) et présente sur sa périphérie des éléments à complémentarité de forme (58) qui génèrent une complémentarité de forme avec le piston (42).

2. Pompe à piston selon la revendication 1,
**caractérisée en ce que**
l'élément de butée (56) présente la forme d'un disque.

3. Pompe à piston selon la revendication 1 ou 2,
**caractérisée en ce que**
l'élément de butée (56) est composé de métal ou de céramique.

4. Pompe à piston selon l'une des revendications 1 à 3,
**caractérisée en ce que**
le piston (42) est une pièce moulée par injection et la matière plastique du piston (42) est injectée de façon à entourer l'élément de butée (56), à l'exception de la surface de butée (54).

5. Pompe à piston selon l'une des revendications précédentes,
**caractérisée en ce que**
la matière plastique du piston (42) présente une certaine proportion de téflon.
